# EUROPEAN PATENT APPLICATION

(11) **EP 1 067 159 A1**
(43) Date of publication of application: **10.01.2001**
(21) Application number: 99112826.5
(22) Date of filing: 02.07.1999
(51) Int. Cl.: C09D 167/00, C09D 5/03

(54) **Thermosetting compositions for powder coatings**

(71) Applicant: UCB, S.A., 1070 Bruxelles (BE)
(72) Inventor: Moens, Luc, 1640 Sint-Genesius-rode (BE); Buysens, Kris, 9700 Oudenaarde (BE); Maetens, Daniel, 1080 Bruxelles (BE)

(57) **Abstract**

Thermosetting binder compositions for powder coatings comprising a linear or branched carboxylic acid group containing isophtalic acid rich polyester, a linear or branched hydroxyl group containing polyester and a curing agent system having functional groups reactive with the polyester carboxylic acid groups and the hydroxyl groups, wherein the carboxylic group containing isophtalic acid rich polyester is amorphous and the hydroxyl group containing polyester is semicrystalline.

## Description

The present invention relates to thermosetting powder compositions comprising as binder a mixture of carboxyl-terminated polyester, a hydroxyl-terminated polyester, a curing agent system capable of reacting with the carboxylic groups and the hydroxyl groups of the polyesters, and more particularly to thermosetting powder compositions which give coatings having remarkable weatherability, excellent mechanical properties and an outstanding flow.

The invention also relates to the use of said compositions for the preparation of powdered paints and varnishes.

Thermosetting powder compositions are well known in the art and are widely used as paints and varnishes for coating the most various articles. The advantages of these powder coatings are numerous; on the one hand, the problems associated with solvents are completely eliminated, and on the other hand, the powders are used without any loss since only the powder in direct contant with the substrate is retained on the article, the excess powder being, in principle, entirely recoverable and reusable. For these and other reasons, the powder coating compositions are preferred to coating compositions in the form of solutions in organic solvents.

Thermosetting powder compositions have already been widely used in the coating of domestic electrical appliances, automobile industry accessories, and the like. They generally contain a thermosetting organic binder, fillers, pigments, catalysts and various additives used to adapt their properties to their intended use.

There are various types of thermosetting powder compositions. The best known compositions contain as binder either a mixture of carboxyl group-containing polymers, such as a carboxyl group-containing polyester or polyacrylate, and epoxy compounds, such as triglycidyl isocyanurate, glycidyl group-containing acrylic copolymers or β-hydroxyalkylamides or a mixture of hydroxyl group-containing polymers, most often a hydroxyl group-containing polyester, with blocked or non-blockes isocyanates, melamine resins, and the like.

The carboxyl group-containing or the hydroxyl group-containing polyesters suitable for use in the preparation of powdered varnishes and paints have already been described in numerous publications such as articles and patents.

These polyesters are usually prepared from aromatic dicarboxylic acids, mainly terephthalic acid and isophthalic acid and optionally a minor proportion of aliphatic or cycloaliphatic dicarboxylic acids, and from various polyols such as ethyleneglycol, neopentyl glycol, 1,6-hexanediol, trimethylolpropane, and the like.

These polyesters based on aromatic dicarboxylic acids, when they are used with an appropriate crosslinking agent, provide thermosetting compositions compositions giving paint and varnish coatings possessing good properties, both as regards their appearance and as regards their mechanical properties (impact resistance, flexiblity).

Some of these polyesters and the powders derived from them often are used because of their remarkable weatherability characteristics. These polyesters mostly are derived from isophtalic acid, being the most important acid constituent among others. Yet, the coatings obtained from these polyesters, though proving outstanding weatherability, do not have any flexibility at all.

Currently, the great majority of polyesters used in heat-curable powder compositions are amorphous polyesters. Now, when the polyester is amorphous, it is difficult to prepare perfect heat-curable pulverulent compositions because they have to meet often contradictory criteria. Thus, these powders must not reagglomerate during handling, their transportation and their storage, which implies that the amorphous polyester must possess a sufficiently high glass transition temperature (Tg). On the other hand, in order for the powder particles to be able to coalesce and to form a perfectly homogeneous and uniform coating, it is necessary that the glass transition temperature (Tg) of the polyester is sufficiently low to ensure a low viscosity in the molten state which, itself, ensures good wetting of the pigments and other solid materials accompanying the polyester in the formulation of the said heat-curable powder compositions.

Moreover, the powder must be capable of melting at the stoving temperature in order to form an even film before the crosslinking reaction begins which results in the final curing. In order to obtain good spreading of the molten film over the surface of the substrate, it is therefore necessary for the viscosity of the polyester in the molten state to be sufficiently low. In fact, a very high viscosity in the moten state prevents good spreading of the molten film and is reflected by a loss in the evenness and in the gloss of the coating. Finally, the rate of the crosslinking reaction of the composition can only be controlled by varying the amount and/or the nature of the crosslinking agent and of the crosslinking catalyst which is optionally used.

In order to solve these problems, heat-curable powder compositions have more recently been proposed in which the binder is composed of a crystalline polyester containing carboxyl groups or hydroxyl groups. In fact, the properties of crystalline polyesters make it possible to overcome, to a large extend, the disadvantages described above which are brought about by the adjustment of the glass transition temperature (Tg), of the viscosity in the molten state and of the reactivity of the amorphous polyesters.

Crystalline polyesters have a melting point greater than 40°C, and, if appropriate, a low glass transition temperature (Tg). This has the consequence that the viscosity in the molten state of crystalline polyesters is much less than that of amorphous polyesters of comparable molecular weight commonly used in heat-curable powder compositions.

This means that powder coating compositions based on crystalline polyesters exhibit a better fluidity of the coating film in the molten state, which gives heat-cured coatings exhibiting an improved appearance.

In addition, by virtue of the crystallinity of the polyesters, the powders formulated with an appropriate crosslinking agent exhibit very good stability towards intermediate storage.

Finally, compared with amorphous polyesters, crystalline polyesters provide coatings having better mechanical properties, in particular excellent flexibility. The use of semi-crystalline carboxylic acid- or hydroxyl functional polyesters as coreactable part of the carboxylic acid- or hydroxyl functional amorphous resin respectively, in a binder system along with a hardener being capable of reacting with the resin functional groups, has been subject of several publications in the form of papers and patents such as US 4,859,760, WO 89/05320, WO 94/02552, WO 95/01407, WO 91/ 14745, WO 97/20895, etc.

Nevertheless, when isophthalic acid rich amorphous polyesters are involved, being especially designed for those applications, where an outstanding weatherability is needed, conflichting properties are observed when hydroxyl group containing or carboxyl group containing resin blends respectively, are compared. So, when a binder composed of a carboxylic acid group containing isophthalic acid rich amorphous polyester along with a carboxylic acid group containing semi-crystalline polyester and a crosslinker having functional groups being reactive with the polyester functional groups, is concerned, the presence of the semi-crystalline polyester induces a huge improvement when flexibility is considered, yet without having a substantial influence on flow.

On the contrary, when a binder composed of a hydroxyl group containing isophthalic acid rich amorphous polyester along with a hydroxyl group containing semi-crystalline polyester and a crosslinker having functional groups being reactive with the polyester functional groups, is concerned, the presence of the semi-crystalline polyester induces an improved flow along with a moderate influence on flexibility.

In conclusion it can be seen that the various powdered compositions which have been proposed today for outdoor applications all are characterised by one or more disadvantages questioning their suitability.

There is, thus, still a need for powdered thermosetting compositions capable of producing coatings showing an outstanding weatherability and not exhibiting the defects of prior art.

According to the present invention, we have, surprisingly, found that by using as a binder a mixture of a carboxylic acid group containing isophthalic acid rich amorphous polyester along with a hydroxyl group containing semi-crystalline polyester and a curing agent system composed of one curing agent having functional groups being reactive with the amorphous polyester carboxylic acid groups and a second curing agent having functional groups being reactive with the semi-crystalline polyester hydroxyl groups, it is possible to obtain powdered thermosetting compositions which produce coatings proving an outstanding weatherability combined with an excellent flow and flexibility.

Powder coatings having as binder a blend of a carboxylic acid functionalised polyester and an hydroxyl functionalised polyester along with a combination of curing agents having functional groups reactive with the polyester functional groups already have been the object of a few number of patent applications. JP10017794 (Nippon Ester Co Ltd) describes a polyester resin composition for powder paints containing an acid functionalised polyester having an acid number of at least 40 mg KOH/g, an hydroxyl functionalised polyester having an hydroxyl number situated between 10 and 60 mg KOH/g, an hydroxyalkylamide-based curing agent reactive with the acid functionalised polyester and an isocyanate-based curing agent reactive with the hydroxyl functionalised polyester resin. The particular thermosetting polyester blend of said invention is composed of :
a) 10 to 70 and preferably 20 to 40 parts of the acid functionalised polyester
b) 90 to 30 and preferably 80 to 60 parts of the hydroxyl functionalised polyester

The powder compositions obtained, provide matt or semi-matt coatings with an excellent smoothness and strength.

JP53058536 (Dainippon Ink & Chem.) describes a polyester resin composition for powder paints comprising :
a) 0.5 - 30.0% weight of an carboxylic acid functionalised polyester with an acid number ranging from 30 to 300 mg KOH/g
b) 5 - 59% weight of an hydroxyl functionalised polyester with an hydroxyl number from 10 to 100 mg KOH/g
c) 0.5 - 20.0% of an epoxy resin
d) 3 - 40% weight of a blocked isocyanate

The powder compositions thus obtained, have good edge part properties.

The compositions such as claimed in each of these two patents, do contrast with the composition of the present invention in that the hydroxyl functionalised polyester is not semi-crystalline. Nor are any of the paint performances suggested such as pursued and obtained in the present invention. Besides, nowhere is it stated that the carboxyl functionalised polyesters are preferably used in an excess to the hydroxyl functionalised polyester.

Thus, according to the present invention, there are provided new powdered thermosetting compositions comprising as binder a mixture of a linear or branched carboxylic acid group containing isophtalic acid rich polyester, a linear or branched hydroxyl group containing polyester and a curing agent system having functional groups reactive with the polyester carboxylic acid groups and the hydroxyl groups, wherein the carboxylic group containing isophtalic acid rich polyester is amorphous and the hydroxyl group containing polyester is semi-crystalline.

According to the invention, the curing agent system is preferably composed of at least one curing agent having functional groups reactive with the polyester carboxylic acid groups and at least one curing agent having functional groups reactive with the polyester hydroxyl groups, and/or at least one curing agent having functional groups reactive with both the polyester carboxylic acid groups and the polyester hydroxyl groups.

According to the invention, the carboxylic acid group containing amorphous polyester is preferably composed of a dicarboxylic acid component comprising 50 to 100 mol percentage of isophthalic acid and from 0 to 50 mol percentage of another diacid selected from fumaric acid, maleic acid, phthalic anhydride, isophtalic acid, terephthalic acid, 1,4-cyclohexanedicarboxylic acid, 1,3-cyclohexanedicarboxylic acid, 1,2-cyclohexanedicarboxylic acid, succinic acid, adipic acid, glutaric acid, pimelic acid, suberic acid, azealic acid, sebacic acid, 1,12-dodecanedioic acid, etc., or the corresponding anhydrides., and of a glycol component comprising 70 to 100 mol percentage of neopentyl glycol and/or 2-butyl- 2-ethyl - 1,3-propanediol and 0 to 30 mol percentage of another glycol selected from ethyleneglycol, propyleneglycol, 1,4-butanediol, 1,6-hexanediol, 1,4-cyclohexanediol, 1,4-cyclohexanedimethanol, 2-methyl 1,3-propanediol, hydrogenated Bisphenol A, hydroxypivalate of neopentyl glycol, etc.

According to the invention, the carboxylic acid group containing amorphous polyester can also be a branched polyester incorporating up to 15 mol percentage relative to isophthalic acid, of a polyacid such as trimellitic acid, pyromellitic acid, etc, or their corresponding anhydrides.

In another specific embodiment, the carboxylic acid group containing amorphous polyester may be a branched polyester incorporating up to 15 mol percentage relative to neopentyl glycol and/or 2-butyl-2-ethyl-1,3-propanediol, of a polyol such as trimethylolpropane, ditrimethylolpropane, pentaerythrytol etc.

According to the invention, the hydroxyl functionalised semi-crystalline polyester is preferably composed of 75 - 100 mol percentage of terephthalic acid and/or 1,4-cyclohexanedicarboxylic acid and from 0 to 25 mol percentage of another diacid selected from fumaric acid, maleic acid, phthalic anhydride, isophthalic acid, terephthalic acid, 1,4 cyclohexanedicarboxylic acid, 1,3-cyclohexanedicarboxylic acid, 1,2-cyclohexane dicarboxylic acid, succinic acid, adipic acid, glutaric acid, pimelic acid, suberic acid, azealic acid, sebacic acid, 1,12-dodecanedioic acid, etc., and of a glycol component comprising from 75 to 100 mol percentage of an aliphatic non-branched diol selected from ethyleneglycol, 1,3-propanediol, 1,4-butanediol, 1,5-pentanediol, 1,6-hexanediol, 1,7-heptanediol, 1,8-octanediol 1,9-nonanediol, 1,10-decanediol, 14-tetradecanediol, 1,16-hexadecanediol, etc. used in a mixture or alone, and 0 to 25 mol percentage of another glycol selected from propyleneglycol, neopentyl glycol, 2-methyl-1,3-propanediol, 2-butyl,2-ethyl-1,3-propanediol, hydrogenated Bisphenol A, hydroxypivalate of neopentyl glycol, 1,4-cyclohexanediol, 1,4-cyclohexanedimethanol, etc.

According to the invention, the hydroxyl functionalised semi-crystalline polyester may also be composed of 75 - 100 mol percentage of a linear non branched aliphatic diacid selected from succinic acid, adipic acid, glutaric acid, pimelic acid, suberic acid, azealic acid, sebacic acid, 1,12-dodecanedioic acid, etc. used in a mixture or alone, and from 0 to 25 mol percentage of another diacid selected from fumaric acid, maleic acid, phthalic anhydride, terephthalic acid, isophthalic acid, 1,2 cyclohexanedicarboxylic acid, 1,3-cyclohexanedicarboxylic acid, 1,4-cyclohexanedicarboxylic acid, etc., and of a glycol component comprising from 75 to 100 mol percentage of a cycloaliphatic diol such as 1,4-cyclohexanediol, 1,4-cyclohexanedimethanol, hydrogenated Bisphenol A, etc. used in a mixture or alone, or an aliphatic non-branched diol such as ethyleneglycol, 1,3-propanediol, 1,4-butanediol, 1,5-pentanediol, 1,6 hexanediol, 1,7-heptanediol, 1,8-octanediol, 1,9-nonanediol, 1,10-decanediol, 14 tetradecanediol, 1,16-hexadecanediol, etc. used in a mixture or alone, and from 0 to 25 mol percentage of another glycol selected from propyleneglycol, neopentyl glycol, 2-methyl-1,3-propanediol, 2-butyl, 2-ethyl-1,3-propanediol, 1,4-cyclohexanediol, 1,4 cyclohexanedimethanol, hydrogenated Bisphenol A, etc.

In a specific embodiment, the hydroxyl functionalised semi-crystalline polyester of the binder may be a branched polyester incorporating up to 15 mol percentage based on the total of terephthalic acid, 1,4-cyclohexanedicarboxylic acid or non-branched aliphatic diacids, of a polyacid such as trimellitic asid, pyromellitic acid, etc., or their corresponding anhydrides.

In another specific embodiment, the hydroxyl functionalised semi-crystalline polyester may be a branched polyester incorporating up to 15 mol percentage based on the total of aliphatic non-branched diols or cycloaliphatic diols, of a polyol such as trimethylolpropane, ditrimethylolpropane, pentaerythrytol etc.

The hydroxyl functionalised semi-crystalline polyester may also be a branched polyester incorporating up to 30 mol percentage based on the total of terephthalic acid, 1,4-cyclohexanedicarboxylic acid or non-branched aliphatic diacids and/or on the total of aliphatic non-branched diols or cycloaliphatic diols, of monofunctional carboxylic acids having at least two hydroxyl groups wherein one or more of the hydroxyl groups can be hydroxyalkyl substituted, selected from α,α-bis-(hydroxymethyl)-propionic acid (dimethylolpropionic acid), α,α-bis-(hydroxymethyl)-butyric acid, α,α,α,-tris(bydroxymethyl)-acetic acid, α,α-bis-(hydroxymethyl)-valeric acid, α,α-bis-(hydroxy) propionic acid or α-phenylcarboxylic acids having at least two hydroxyl groups directly pandant to the phenyl ring (phenolic hydroxyl groups) such as 3,5-dihydroxybenzoic acid, etc.

According to the present invention, the carboxylic acid group containing isophthalic acid rich polyester in the binder very suitably has:
- an acid number from 15 to 100 mg KOH/g and preferably from 30 to 70 mg KOH/g;
- a number averaged molecular weight ranging from 1100 to 15000 and preferably from 1600 to 8500, measured by gel permeation chromatography (GPC);
- a glass transition temperature (Tg) from 40 to 80°C, measured by Differential Scanning Calorimetry according to ASTM D3418 with a heating gradient of 20°C per minute ; and
- an ICI (cone/plate) viscosity at 200°C ranging from 5 to 15000 mPa.s accordingly to ASTM D4287-88

According to the present invention, the hydroxyl group containing semi-crystalline in the binder very suitably has:
- an hydroxyl number from 10 to 100 mg KOH/g and preferably from 15 to 80 mg KOH/g;
- a number averaged molecular weight ranging from 1100 to 17000 and preferably from 1400 to 11200;
- a fusion zone from 50 to 150°C, measured by Differential Scanning Calorimetry (DSC) according to ASTM D3418 with a heating gradient of 20°C per minute;
- a glass transition temperature (Tg) from -50 to 50°C, measured by Differential Scanning Calorimetry according to ASTM D3418 with a heating gradient of 20°C per minute;
- a degree of crystallinity of at least 5 J/g and preferably 10J/g, measured by Differential Scanning Calorimetry according to ASTM D3415 with a heating gradient of 20°C per minute; and
- an ICI (cone/plate) viscosity measured by Differential Scanning Calorimetry according to ASTM D4287-88, measured 175°C ranging from 5 to 10000 mPa.s

In a specific embodiment, the thermosetting polyester blend of the binder is composed of:
- 55 to 95 and preferably 70 to 90 parts by weight of the carboxylic acid group containing isophthalic acid rich amorphous polyester; and
- 45 to 5 and preferably 30 to 10 parts by weight of the hydroxyl group containing semi-crystalline polyester.

The particular thermosetting polyester blend can be obtained by dry blending the amorphous and the semi-crystalline polyester using a mechanical mixing procedure as available for the premixing of the powder paint constituents.

Alternatively the amorphous and the semi-crystalline polyester can be blended in the melt using the conventional cylindrical double-walled reactor or by extrusion such as the Betol BTS40.

According to the present invention, the curing agent having functional groups reactive with the carboxylic acid groups of the isophthalic acid rich amorphous polyester is, more in particular, a polyepoxy compound or a β-hydroxyalkylamide containing compound.

Among the curing agents having functional groups reactive with the carboxylic acid groups of the amorphous polyester, following compounds may be used :
- polyepoxy compounds solid at room temperature and containing at least two epoxy groups per molecule such as, for example, triglycidyl isocyanurate like the one marketed under the name Araldite PT810 (Ciba) or the epoxy resin Araldite PT910 (Ciba)
- β-hydroxyalkylamides which contain at least one, preferably two bis(β-hydroxyalkyl)amide groups, for example, those mentioned in International patent application US-A-4727111, US-A-4788255, US-A-4076917, EP-A-322834 and EP-A-473380.
- Acrylic copolymers containing glycidyl groups obtained from glycidyl methacrylate and/or glycidyl acrylate and a (meth)acrylic monomer and, optionally, an ethylenically mono-unsaturated monomer different from glycidyl (meth)acrylate or from the (meth)acrylic monomer. An example of this type of acrylic copolymer is GMA252 marketed by Estron Chemical Inc, and is mentioned in International patent application PCT WO91/01748.

The curing agent described herein above is used in an amount from 0.25 to 1.40 preferably from 0.60 to 1.05 equivalent of carboxyl group present in the amorphous polyester per equivalent of epoxy or β-hydroxyalkyl groups.

Also according to the present invention, the curing agent having functional groups reactive with the hydroxyl groups of the semi-crystalline polyester, may be a blocked polyisocyanate compound.

Among the curing agents having functional groups reactive with the hydroxyl groups of the semi-crystalline polyester, the suitable blocked isocyanate crosslinking agents, well known in the art, may be used.

Examples of the blocked polyisocyanate crosslinking compounds include those which are based on isophorone diisocyanate blocked with ε-caprolactam, commercially available as Hüls B1530, Ruco NI-2 and Cargill 2400, or toluene-2,4-diisocyanate blocked with ε-caprolactam, commercially available as Cargill 2450, and phenol-blocked hexamethylene diisocyanate.

Another class of blocked polyisocyanate compounds which may be employed are adducts fo the 1,-diazetidine-2,4-dione dimer of isophorone diisocyanate and a diol, wherein the ratio of NCO to OH-groups in the formation of the adduct is about 1:0.5 to 1:0.9, the mole ratio of diazetidinedione to diol is from 2:1 to 6:5, the content of free isocyanate groups in the adduct is not greater than 8 weight percent and the adduct has a molecular weight of about 500 to 4000 and a melting point of about 70 to 130°C. Such an adduct is commercially available under the name Hüls BF1540.

The crosslinking agent described herein above is used in an amount from 0.3 to 1.4 preferably from 0.7 to 1.2 equivalent of hydroxyl group present in the semi-crystalline polyester per equivalent of isocyanate.

The carboxylic acid group containing amorphous polyester and the hydroxyl group containing semi-crystalline polyester, according to the present invention, are prepared using conventional esterification techniques well known in the art. The polyesters are prepared according to a procedure consisting of one or more reaction steps.

For the preparation of these polyesters, a conventional reactor equipped with a stirrer, an inert gas (nitrogen) inlet, a thermocouple, a distillation column connected to a water-cooled condenser, a water separator and a vacuum connection tube is used.

The esterification conditions used to prepare the polyesters are conventional, namely a standard esterification catalyst, such as dibutyltin oxide, dibutyltin dilaurate, n-butyltin trioctoate, sulphuric acid or sulphonic acid, can be used in an amount from 0.05 to 1.50% by weight of the reactants and optionally, colour stabilisers, for example, phenolic antioxidants such as Irganox 1010 (Ciba) or phosphonite- and phosphite-type stabilisers such as tributylphosphite, can be added in an amount from 0 to 1% by weight of the reactants.

Polyesterification is generally carried out at a temperature which is gradually increased from 130°C to about 190 to 250°C, first under normal pressure, then, when necessary, under reduced pressure at the end of each process step, while maintining these operating conditions until a polyester is obtained, which has the desired hydroxyl and/or acid number. The degree of esterification is followed by determining the amount of water formed in the course of the reaction and the properties of the obtained polyester, for example the hydroxyl number, the acid number, the molecular weight or the viscosity.

When polyesterification is complete, crosslinking catalysts can optionally be added to the polyesters while they are still in the molten state. These catalysts are added in order to accelerate crosslinking of the thermosetting powder composition during curing and further called accelerators for that reason. Examples of such accelerators include amines (e.g. 2-phenylimidazoline), phosphines (e.g. triphenylphosphine), ammonium salts (e.g. tetrabutylammonium bromide or tetrapropylammoium chloride), phosphonium salts (e.g. ethyltriphenylphosphonium bromide or tetrapropylphosphonium chloride) and organo-tin compounds (e.g. dibutyltin dilaurate, dibutyltin dimaleate, dibutyltin oxide, stannous octoate, 1,3-diacetoxy-1,1,3,3-tetrabutyldistanoxane). These accelerators are preferably used in an amount of 0 to 5% with respect of the weight of the polyester.

In a specific embodiment, the binder may substantially be based on:
- 28 to 93, preferably 43 to 86 parts by weight of the carboxylic acid group containing isophthalic acid rich amorphous polyester
- 43 to 3, preferably 29 to 7 parts by weight of the hydroxyl group containing semi-crystalline polyester
- 1 to 45, preferably 3 to 35 parts by weight of a curing agent having functional groups being reactive with the carboxylic acid groups of the amorphous polyester
- 21.0 to 0.1, preferably 9.0 to 0.5 parts by weight of a curing agent having functional groups reactive with the hydroxyl groups of the semi-crystalline polyester
based on the total weight of polyester resins and curing agents.

In addition to the essential components described above, compositions within the scope of the present invention can also include flow control agents such as Resiflow PV5 (Worlee), Modaflow (Monsanto) Acronal 4F (BASF), etc., and degassing agents such as benzoin (BASF) etc. To the formulation UV-light absorbers such as Tinuvin 900 (Ciba), hindered amine light stabilisers represented by Tinuvin 144 (Ciba), other stabilizing agents such as Tinuvin 312 and 1130 (Ciba), antioxidants such as Irganox 1010 (Ciba) and stabilisers from the phosphonite or phosphite type can be added.

Both, pigmented systems as well as clear lacquers can be prepared.

A variety of dyes, pigments and fillers can be utilised in the composition of this invention. Examples of useful pigments and dyes are: metallic oxides such as titaniumdioxide, ironoxide, zincoxide and the like, metal hydroxides, metal powders, sulphides, sulfates, carbonates, silicates such as ammoniumsilicate, carbon black, talc, china clay, barytes, iron blues, leadblues, organic reds, organic maroons and the like.

The components of the composition according to the invention may be used as the coating material for entirely or partially coated substrate. For that purpose, the components may be mixed by dry blending in a mixer or blender (e.g. drum mixer). The premix is then homogenised at temperatures ranging from 70 to 150°C in a single screw extruder such as the BUSS-Ko-Kneter or a double screw extruder such as the PRISM or APV. The extrudate, when cooled down, is grounded to a powder with a particle size ranging from 10 to 150 µm. The powdered composition may be deposed on the substrate by use of a powder gun such as an electrostatic CORONA gun or TRIBO gun. On the other hand well known methods of powder deposition such as the fluidised bed technique can be used. After deposition the powder is heated to a temperature between 160 and 220°C, causing the particles to flow and fuse together to form a smooth, uniform, continuous, uncratered coating on the substrate surface.

The following examples are submitted for a better understanding of the invention without being restricted thereto.

### Example 1: Synthesis of an isophthalic acid rich polyester

A mixture of 398.6 parts of neopentyl glycol and 22.2 parts of trimethylpropane is placed in a conventional four neck round bottom flask equipped with a stirrer, a distillation column connected to a water cooled condenser, an inlet for nitrogen and thermometer attached to a thermoregulator.

The flask contents are heated, while stirring under nitrogen, to a temperature of circa 130°C at which point 721.1 parts of isophthalic acid and 2.5 parts of n-butyltintrioctoate are added. The heating is continued gradually to a temperature of 230°C. Water is distilled from the reactor from 180°C on. When distillation under atmospheric pressure stops, a vacuum of 50 mm Hg is gradually applied. After three hours at 230°C and 50 mm Hg, following characteristics are obtained:

| | |
|---|---|
| AN | 32 mg KOH/g |
| OHN | 2 mg KOH/g |
| ICI ^{200°C} (cone/plate) | 8000 mPa.s |
| Tg (DSC, 20°/min) | 59°C |

The carboxyl functionalised polyester is cooled down to 180°C and 2.5 parts of tri(2,4-di-tert.-butylphenyl)phosphite and 2.5 parts of octadecyl-3-(3,5-di-tert.-butyl-4-hydroxyphenyl)propionate are added. After half an hour of stirring the reactor is discharged.

### Example 2:

According to the procedure described in the Example 1, 429.3 parts of neopentyl glycol and 714.3 parts of isophthalic acid are put into reaction until a polyester with following characteristics is obtained:

| | |
|---|---|
| AN | 21 mg KOH/g |
| OHN | 3 mg KOH/g |
| ICI ^{200°C} (cone/plate) | 5200 mPa.s |
| Tg (DSC, 20°/min) | 63°C |

To the polyester standing at 180°C tri(2,4-di-tert.-butylphenyl)phosphite and octadecyl-3-(3,5-di-tert. -butyl-4-hydroxyphenyl)propionate are added. After one hour of stirring the reactor is discharged.

### Example 3:

A mixture of 400.7 parts of neopentyl glycol and 14.5 parts of trimethylolpropane is placed in a reactor as for Example 1. At a temperature of 130°C 186.7 parts of terephthalic acid, 435.6 parts of isophthalic acid and 2.5 parts of n-butyltintrioctoate are added. The reaction is continued at 220°C under atmosphric pressure until about 95% of the theoretical amount of water is distilled and a transparent hydroxyl functionalised prepolymer with the following characteristics is obtained:

| | |
|---|---|
| AN | 8 mg KOH/g |
| OHN | 47 mg KOH/g |

To the first step prepolymer standing at 200°C, 98.0 parts of isophthalic acid are added. Thereupon, the mixture is gradually heated to 230°C. After a 2 hour period at 230°C and when the reaction mixture is transparent, a vacuum of 50 mm Hg is gradually applied. After 3 hours at 230°C and 50 mm Hg, following characteristics are obtained:

| | |
|---|---|
| AN | 32.6 mg KOH/g |
| OHN | 3 mg KOH/g |
| ICI ^{200°C} (cone/plate) | 5600 mPa.s |
| Tg (DSC, 20°/min) | 61°C |

To the polyester standing at 180°C tri(2,4-di-tert.-butylphenyl)phosphite and octadecyl-3-(3,5-di-tert.-butyl-4-hydroxyphenyl)propionate are added. After half an hour of stirring the reactor is discharged.

### Example 4:

According to the procedure described in Example 3, 368.3 parts of neopentyl glycol, 39.8 parts of trimethylolpropane, 367.4 parts of terephthalic acid and 193.5 parts of isophthalic acid are put into reaction until a hydroxyl funtionalised prepolymer with following characteristics are obtained:

| | |
|---|---|
| AN | 5 mg KOH/g |
| OHN | 83 mg KOH/g |

To the hydroxyl functionalised prepolymer 174.4 parts of isophthalic acid are added and the reaction is continued as in Example 3 until following characteristics are obtained:

| | |
|---|---|
| AN | 50.8 mg KOH/g |
| OHN | 1.1 mg KOH/g |
| ICI ^{200°C} (cone/plate) | 7100 mPa.s |

To the polyester standing at 180°C tri(2,4-di-tert.-butylphenyl)phosphite and octadecyl-3-(3,5-di-tert.-butyl-4-hydroxyphenyl)propionate are added. After half an hour of stirring the reactor is discharged.

### Example 5 (comparative example):

According to the procedure described in Example 1, 434.7 parts of neopentyl glycol, 22.2 parts of trimethylolpropane and 690.4 parts of isophthalic acid are put into reaction until a hydroxyl functionalised polyester with following characteristics is obtained:

| | |
|---|---|
| AN | 3 mg KOH/g |
| OHN | 31.5 mg KOH/g |
| ICI ^{200°C} (cone/plate) | 4700 mPa.s |
| Tg (DSC, 20°/min) | 57°C |

### Example 6:

A mixture of 544.5 parts of 1,4-cyclohexanedimethanol, 39.9 parts of trimethylolpropane, 551.8 parts of adipic acid and 2.5 parst of n-butyltintrioctoate is placed in a reactor as for Example 1. The flask contents are heated, while stirring under nitrogen to a temperature of circa 140°C, at which point water is distilled from the reactor. The heating is continued gradually to a temperature of 220°C. When distillation under atmospheric pressure stops, 1.0 part of tributylphophite and 1.0 part of n-butyltintrioctoate are added and a vacuum of 50 mm Hg is gradually applied. After 5 hours at 220 °C and 50 mm Hg, the following characteristics are obtained:

| | |
|---|---|
| AN | 3 mg KOH/g |
| OHN | 53 mg KOH/g |
| ICI ^{125°C} (cone/plate) | 2800 mPa.s |
| ICI ^{100°C} (cone/plate) | 6800 mPa.s |
| Fusion zone | 70 - 88°C |

The hydroxyl functionalised polyester is cooled down to 160°C and 5 parts of Tinuvin 144, 10 parts of Tinuvin 1130 and 10 parts of Tinuvin 312 are added. After one hour stirring the resin is discharged.

### Example 7:

According to the procedure described in Example 6, 521.1 parts of 1,4-cyclohexanedimethanol, 22.5 parts of trimethylolpropane and 528.1 parts of adipic acid are put into reaction until a hydroxyl functionalised prepolymer with following characteristics is obtained:

| | |
|---|---|
| AN | 3 mg KOH/g |
| OHN | 32 mg KOH/g |

To the hydroxyl functionalised prepolymer standing at 175°C, 67.5 parts of 2,2-bis(hydroxymethyl)propionic acid are added. The temperature is increased to 220°C and a vacuum of 50 mm Hg is gradually applied until a hydroxyl functionalised resin with following characteristics is obtained:

| | |
|---|---|
| AN | 6 mg KOH/g |
| OHN | 62 mg KOH/g |
| ICI ^{150°C} (cone/plate) | 4100 mPa.s |
| Fusion zone | 65 - 78°C |

### Example 8:

According to the procedure described in Example 6, 505.2 parts of 1,4-cyclohexanediol, 16.0 parts of trimethylolpropane and 635.6 parts of adipic acid are put into reaction until a resin with following characteristics is obtained:

| | |
|---|---|
| AN | 3 mg KOH/g |
| OHN | 19 mg KOH/g |
| ICI ^{175°C} (cone/plate) | 4900 mPa.s |
| ICI ^{200°C} (cone/plate) | 2400 mPa.s |
| Fusion zone | 78- 114°C |

### Example 9:

According to the procedure described in Example 7, 222.9 parts of ethyleneglycol and 790.4 parts of dodecanoic acid are put into reaction until a hydroxyl functionalised prepolymer with following characteristics is obtained:

| | |
|---|---|
| AN | 3 mg KOH/g |
| OHN | 24 mg KOH/g |

The hydroxyl functionalised prepolymer standing at 175°C, 42.0 parts of 2,2-bis(hydroxymethyl)propionic acid are added and the reaction is continued as in Example 7, until a hydroxyl functionalised prepolymer with following characteristics is obtained:

| | |
|---|---|
| AN | 4 mg KOH/g |
| OHN | 42 mg KOH/g |

The hydroxyl functionalised polyester thus obtained, is cooled down to 175°C and 85.1 parts of 2,2-bis(hydroxymethyl)propionic acid are added. The temperature is increased to 220°C and a vacuum of 50 mm Hg is gradually applied until a hydroxyl functionalised prepolymer with following characteristics is obtained:

| | |
|---|---|
| AN | 8 mg KOH/g |
| OHN | 79 mg KOH/g |
| ICI ^{150°C} (cone/plate) | 2000 mPa.s |
| Fusion zone | 71- 89°C |

### Example 10:

According to the procedure described in Example 6, 492.6 parts of 1,6-hexanediol and 648.0 parts of terephthalic acid are put into reaction until a hydroxyl functionalised resin with following characteristics is obtained:

| | |
|---|---|
| AN | 1 mg KOH/g |
| OHN | 33 mg KOH/g |
| ICI ^{150°C} (cone/plate) | 4400 mPa.s |
| ICI ^{175°C} (cone/plate) | 2000mPa.s |
| Fusion zone | 133- 144°C |

### Example 11:

According to the procedure described in Example 6, 556.6 parst of 1,4-cyclohexanedimethanol, 15.9 parts of trimethylolpropane and 564.1 parts of adipic acid are put into reaction until a hydroxyl functionalised resin with following characteristics is obtained:

| | |
|---|---|
| AN | 2 mg KOH/g |
| OHN | 23 mg KOH/g |
| ICI ^{150°C} (cone/plate) | 1500 mPa.s |
| Fusion zone | 82- 112°C |

### Example 12:

According to the procedure described in Example 10, 454.9 parts of 1,6-hexanediol and 591.8 parts of terephthalic acid are put into reaction until a hydroxyl functionalised prepolymer with following characteristics is obtained:

| | |
|---|---|
| AN | 9 mg KOH/g |
| OHN | 49 mg KOH/g |

To the hydroxyl functionalised prepolymer, standing at 200°C, 92.0 parts of isophthalic acid are added. The reaction temperature is increased to 230°C and a vacuum of 50 mm Hg is gradually applied until a carboxyl functionalised polyester with following characteristics is obtained:

| | |
|---|---|
| AN | 31 mg KOH/g |
| OHN | 1 mg KOH/g |
| ICI ^{150°C} (cone/plate) | 7200 mPa.s |
| ICI ^{175°C} (cone/plate) | 3000 mPa.s |
| Fusion zone | 133- 146°C |

### Example 13 (comparative example):

According to the procedure described in Example 6, 530.8 parts of 1,4-cyclohexanedimethanol, 15.9 parts of trimethylolpropane and 589.9 parts of adipic acid are put into reaction until a carboxyl functionalised polyester with following characteristics is obtained:

| | |
|---|---|
| AN | 21 mg KOH/g |
| OHN | 3 mg KOH/g |
| ICI ^{200°C} (cone/plate) | 6400 mPa.s |
| Fusion zone | 100- 130°C |

### Example 14: Synthesis of an accelerator containing masterbatch

For the thermosetting reaction between the hydroxyl functions of the hydroxyl functionalised semi-crystalline polyester and the reactive groups of the appropriate crosslinker, an organo-tin compound such as dibutyltindilaurate is added as accelerator. For feasability reasons, the accelerator, being a liquid, is added to the premix as a masterbatch.

According to the procedure of Example 1, 397.0 parts of neopentyl glycol, 13.4 parts trimethylolpropane and 631.3 parts of isophthalic acid are put into reaction until a polyester with following characteristics is obtained:

| | |
|---|---|
| AN | 2 mg KOH/g |
| OHN | 21 mg KOH/g |
| ICI ^{200°C} (cone/plate) | 12500 mPa.s |
| Tg (DSC, 20°/min) | 60°C |

To the hydroxyl functionalised polyester standing at 180°C, 50.0 parts of dibutyltindilaurate are added. After half an hour of stirring the resin is discharged.

### Example 15:

The polyester as illustrated above, are then formulated to a powder accordingly to one of the formulations as mentionned below.

| Formulation A White paint formulation | | Formulation B Brown paint formulation | | Formulation C Green paint formulation | |
|---|---|---|---|---|---|
| Binder | 69.06 | Binder | 78.33 | Binder | |
| Kronos 2310 | 29.60 | Bayferrox 130 | 4.44 | 66.10 | |
| Resiflow PV5 | 0.99 | Bayferrox 3950 | 13.80 | Kronos 2310 | 3.95 |
| Benzoin | 0.35 | Carbon Black FW2 | 1.09 | Sicomin L1522 | 23.67 |
| | | Resiflow PV5 | 0.99 | Heliogene Blue K7090 | 0.99 |
| | | Benzoin | 0.35 | Carbon Black 101 | 3.95 |
| | | | | Resiflow PV5 | 0.99 |
| | | | | Benzoin | |
| | | | | 0.35 | |

For the preparation of the powder formulation, the carboxyl functionalised isophthalic acid rich amorphous polyester resin and the hydroxyl functionalised semi-crystalline polyester resin can be used as a blend or as separate resins. When used as a blend, blending is done by mixing the respectively resins in the molten state using a conventional round bottom flask.

The powders are prepared first by dry blending of the different components and then by homogenisation in the melt using a PRISM 16 mm L/D 15/1 twin screw extruder at an extrusion temperature of 85°C. The homogenised mix is then cooled and grinded in a Alpine 100 UPZII. Subsequently the powder is sieved to obtain a particle size between 10 and 110 µm. The powder thus obtained is deposited on chromated (Cr ⁶⁺) aluminium H5005, DIN 50939 with a thickness of 1 mm, by electrostatic deposition using the GEMA - Volstatic PCG 1 spraygun. At a film thickness between 50 and 80 µm the panels are transferred to an air-ventilated oven, where curing proceeds for 15 minutes at a temperature of 200°C. The paint characteristics for the finished coatings obtained from the combination of the different amorphous and semi-crystalline polyesters, as illustrated in this invention, are reproduced in the tables below. In the same tables are reproduced, as comparative examples, the paint performances of the powders derived from a blend of a carboxyl functionalised amorphous and a carboxyl functionalised semi-crystalline polyester (example 25 & 29) on the one hand and from a blend of a hydroxyl functionalised amorphous and a hydroxyl functionalised semi-crystalline polyester (example 26 & 28) on the other hand. Example 25 & 29 thus answers a composition as claimed in PCT WO91/14745 (Courtaulds Coatings Ltd), meanwhile Example 26 and 28 complies with those compositions such as described in PCT W089/05320 (Eastman Kodak).

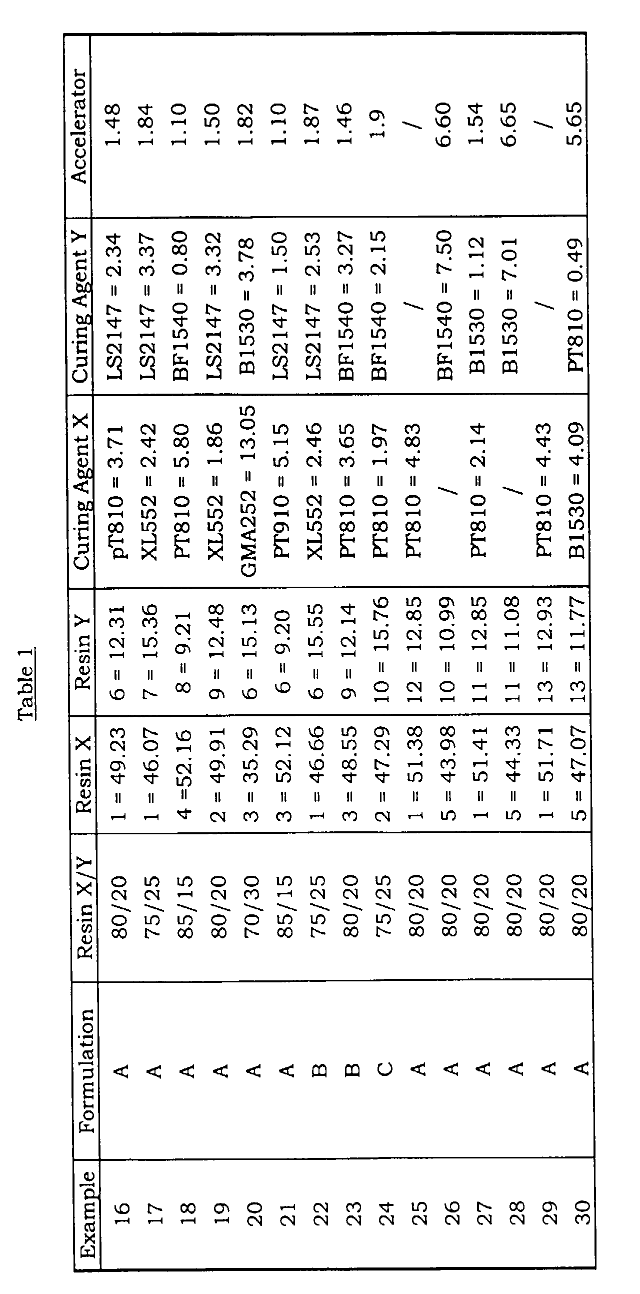

Table 1 indicates the powder compositions according to the invention (example 16 to 24 and example 27) as well as the powder compositions according to prior art such as Courtaulds Coatings (example 25 and 29) and Eastman Kodak (example 26 and 28) respectively. The powder composition of example 30 is given as comparative example in which the amorphous isophthalic acid rich polyester is hydroxyl functionalised, meanwhile the semi-crystalline polyester is carboxyl functionalised.

In this table:
Column 1: indicates the identification number of the formulation
Column 2: indicates the type of formulation
   A = white (RAL9010)
   B= medium brown (RAL8014)
   C= Dark Green (RAL6005)
Column 3: indicates the weight ratio of the amorphous over the semi-crystalline polyester
Column 4: indicates the type (example) and quantity of the amorphous polyester used in the formulation
Column 5: indicates the type (example) and quantity of the semi-crystalline polyester used in the formulation
Column 6: indicates the type and quantity of the curing agent having functional groups being reactive with the polyester carboxylic groups where:
   PT810 = Araldite 810 (Ciba) = triglycidylisocyanurate
   PT910 = Araldite 910 (Ciba) = diglycidylterephthalate/ triglycidyltrimellitate mixture (75/25)
   XL552 = Primid XL552 (EMS) = N,N,N',N'-tetrakis-(2-hydroxyethyl)-adipamide
   GMA252 (Estron) = glycidyl group containing acrylic copolymer
Column 7: indicates the type and quantity of the curing agent having functional groups being reactive with the polyester hydroxyl groups where:
   LS2147 (Bayer) = cycloaliphatic polyuretdione
   B1530 (Hüls) = e-caprolactam blocked isophorone diisocyanate
   BF1540 (Hüls) = uretdione blocked isophorone diisocyanate
Column 8: indicates the amount of accelerator containing masterbatch, needed for accelerating the reaction between the hydroxyl functions of the polyester and the isocyanate functions of the curing agent.

In table 2 the paint performances of the powder paints of example 16 to 30, obtained after a 15-minute curing schedule at 200°C, are reproduced.

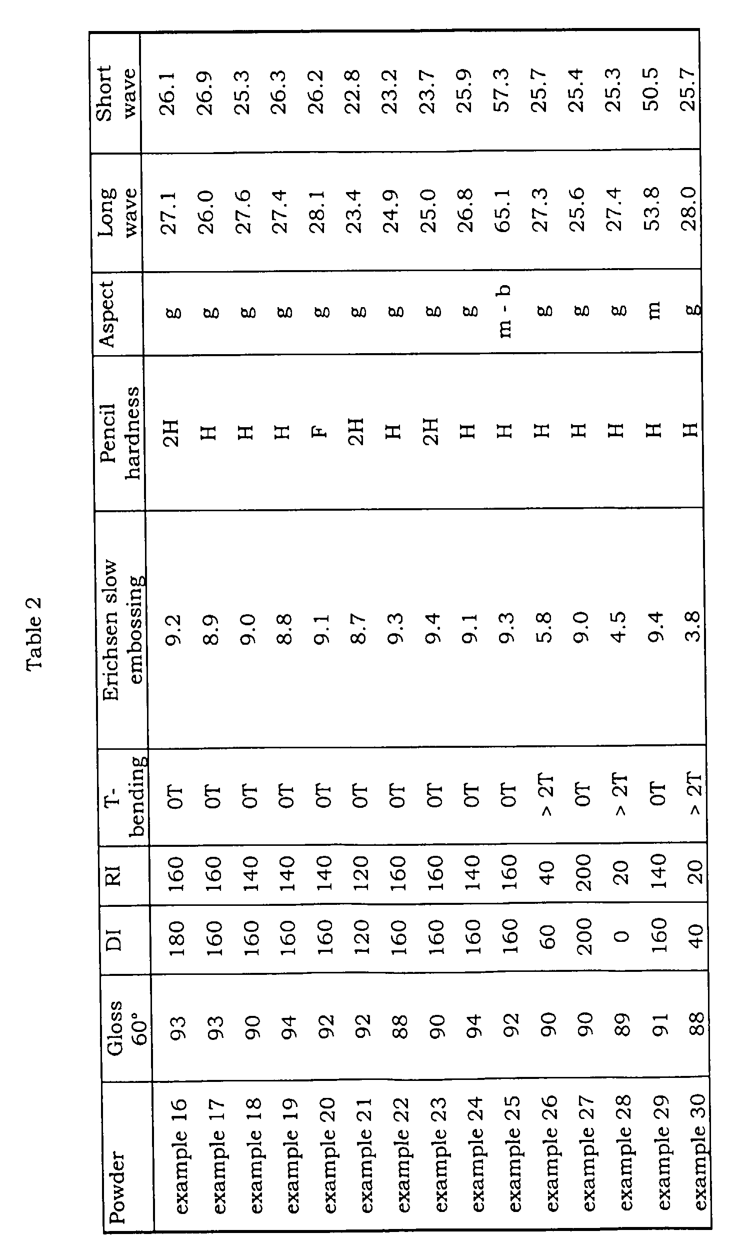

In this table:
Column 1: represents the identification of the illustrated example
Column 2: indicates the 60° gloss, measured according to ASTM D523
Column 3: indicates the direct impact strength according to ASTM D2794. The highest impact which does not crack the coating is recorded in kg.cm.
Column 4: indicates the reverse impact strength according to ASTM D2794. The highest impact which does not crack the coating is recorded in kg.cm.
Column 5: indicates the value of T-bend according to ASTM D4145-83. The minimum T-bend to no paint fracture is recorded.
Column 6: indicates the Erichsen slow embossing according to ISO 1520. The highest penetration which does not crack the coating is recorded in mm.
Column 7: indicates the pencil hardness according to the scratch Hardness Tester according to Wolff-Wilborn
Column 8: indicates the aspect of the coating:
   g: very smooth, mirror-like finish
   m: orange peel
   b: strong orange peel
Column 9: indicates the "long waviness" as measured with the BYK-Gardner surface tester.
Column 10: indicates the "short waviness" as measured with the BYK-Gardner surface tester.

As appears from the table 2, the powders according to the present invention (example 16 to 24 and example 27) thus prove to satisfy a combination of properties, such as outstanding flexibility and flow, which were never obtained from powder formulations as claimed in prior art. As clearly demonstrated in examples 25 and 29, the combination of an isophthalic acid rich carboxylic acid group containing amorphous polyester and a semi-crystalline carboxylic acid group containing polyester along with an curing agent having functional groups reactive with both the polyesters carboxylic groups, such as claimed in international patent application PCT WO91/14745 (Courtaulds Coatings), results in powder coatings which, upon curing, prove an excellent flexibility, yet without an acceptable aspect paticularly observed as a mediocre to strong orange peel. Otherwise, and as demonstrated in examples 26 and 28, the combination of an isophthalic acid rich hydroxyl group containing amorphous polyester and a semi-crystalline hydroxyl group containing polyetser along with an curing agent having functional groups reactive with both the polyesters hydroxyl groups, such as claimed in international patent application PCT W089/05320 (Eastman Kodak), results in powder coatings which, upon curing, prove an outstanding flow, typical of blocked isocyanate based powder coatings, yet without meeting the requirements for impact and T-bending tests.

Similarly, when hydroxyl group containing isophthalic acid rich amorphous polyester is combined with a carboxylic group containing semi-crystalline polyetser along with two curing agents, one of which having functional groups reactive with carboxylic acid functions and the other one having functional groups reactive with hydroxyl functions, the powder derived proves upon curing an outstanding flow, without any flexibility.

The advantageous influence on flow as obtained by curing the powder coating compositions of the present invention, more clearly appears when "wave scan" measurements are considered.

The so-called "wave scan" (BYK-Gardner, Application report wave scan, Germany, 1992) was developed by BYK-Gardner in order to simulate the visual impression obtained from optical inspection of surface structures. Here, the measuring principle is based on modulation of the light from a small diode reflected by the surface structures of the sample. The laser light shines on the surface at an angle of 60°, and the reflected light is detected at the gloss angle (60° opposite). During the measurement, the wave scan is moved across the sample surface over a scan length of about 10 cm, with a data point recorded every 0.08 mm. The measured data of the brightness profile (modulation of the reflected light) are first separated by mathematical filtering into a long wave (structural size > 0.6 mm) and a short wave (structural size < 0.6 mm). The values of so-called "long waviness" (structures from 10 to 0.6 mm) and "short waviness" (structures from 0.6 to 0.1 mm) result from the variance of the filtered data. Here, the measuring scale goes from 0 to 100, with lower values indicating a smoother structure.

Besides an oustanding flexibility and flow, the powder coating compositions of the present invention prove to satisfy an excellent outdoor resistance comparable to or better than the currently used nowadays commercial polyester based powders. For outdoor resistance, accelerated weathering as well as acid hydrolysis are verified. In table 3, the relative gloss values, recorded every 400 hours, according to ASTM D523, are reported for the coating obtained from examples 22 and 23, submitted to the Q-UV accelerated weathering test. In the same table are given the weathering results for the resins of examples 1 and 3, as well as of a commercial carboxylic acid functionalised amorphous polyester (Crylcoat 440 from UCB Chemicals) all formulated in a 93/7 ratio with PT810 according to the brown paint formulation as in formulation B.

In this table only gloss reductions until 50% of the maximum value are mentionned. Weathering measurement are conducted in a very severe environment, i.e. the Q-UV accelerated weathering tester (Q-Panel Co) according to ASTM G53-88 (standard practice for operating light and water exposure apparatus - fluorescent UV/condensation type - for exposure of non metallic materials).

For this table, coated panels have been subjected to the intermittent effects of condensation (4 hours at 50°C) as well as the damaging effects of sunlight simulated by fluorescent UV-A lamps (340 nm, I = 0.77 W/m²/nm) (8 hours at 60°C). For this type of lamps a good correlation with natural sunlight is observed, contrary to the UV-B 313 nm lamps, where unwanted or unnatural chemical reactions are induced, as described in "Methods for UV Durability Predictions of Polymer Coatings" from Courtaulds Coatings Ltd. as presented during the XX^{th} International Conference in Organic Coatings/Science and Technology (Athens, Greece, 07/94) or as described in the Technical Bulletin L8006 from Q-Panel or by N. Patel, JOCCA 3, 104, (1991).

The panels used in the Q-UV are chromated aluminium ones.

**Table 3**

| UV-A (340 nm, I=0.77 W/m²/nm) | | | | | |
|---|---|---|---|---|---|
| Hours | Example 22 | Formulation B Example 1 | Example 23 | Formulation B Example 3 | Formulation B Crylcoat 440 |
| 0 | 100 | 100 | 100 | 100 | 100 |
| 400 | 99 | 100 | 100 | 100 | 99 |
| 800 | 100 | 99 | 98 | 100 | 96 |
| 1200 | 99 | 100 | 97 | 97 | 95 |
| 1600 | 99 | 100 | 97 | 97 | 80 |
| 2000 | 98 | 100 | 95 | 97 | 74 |
| 2400 | 99 | 98 | 93 | 96 | 42 |
| 2800 | 99 | 99 | 89 | 95 | |
| 3200 | 98 | 98 | 83 | 92 | |
| 3600 | 99 | 96 | 76 | 89 | |
| 4000 | 97 | 91 | 68 | 87 | |
| 4400 | 97 | 89 | 61 | 84 | |
| 4800 | 96 | 86 | 56 | 78 | |
| 5200 | 93 | 80 | 48 | 68 | |
| 5600 | 87 | 76 | | 63 | |
| 6000 | 84 | 74 | | 54 | |
| 6400 | 73 | 60 | | 45 | |
| 6800 | 64 | 54 | | | |
| 7200 | 58 | 48 | | | |
| 7600 | 55 | | | | |
| 8000 | 52 | | | | |
| 8400 | 46 | | | | |

In table 4, the acid hydrolysis resistance of the coating of example 24 as well as of a commercial carboxylic acid functionalised amorphous polyester (Crylcoat 440 from UCB Chemicals) formulated in a 93/7 ratio with PT810 according to the green paint formulation as in formulation C, is reproduced by indicating the Δb* -values according to "Compagnie Internationale d'Eclarage" L*a*b* - colour measurement method (CIE - L*a*b*).

Acid hydrolysis resistance is determined according to IS03231 (Determination of Resistance to Humid Atmospheres Containing Sulphur Dioxide).

Chromated aluminium panels painted with powders of formulation C are submitted to the acid humid atmosphere. One testcycle consists of 8 hours at 45°C and 2 litres of SO₂ followed by a 16 hours degassing at room temperature. After each testcycle the Δb* -value is measured using a spectrophotometer with measuring geometry 0/45° and a D65-type illuminant. Using the CIE - L*a*b*-method, the b*-value is an indicator for blue/yellow colour variation. The green coloured powder paints (formulation C), containing Sicomin LS1522 (yellox pigment), upon exposure to acid conditions will turn to blue due to the destruction of the Sicomin LS1522, becoming not well protected by the binder for the case the binder is insufficiently resistant to acid hydrolysis conditions.

An acid hydrolysis test takes 25 testcycles. The lower the Δb* -value the more the binder system is resistant to acid hydrolysis conditions.

A binder system being sufficiently resistant to acid hydrolysis conditions proves a Δb* -value of less than 5 after 25 testcycles.

**Table 4**

| Cycle | Example 24 | Crylcoat 440 |
|---|---|---|
| 0 | 0.00 | 0.00 |
| 1 | 0.25 | 0.25 |
| 2 | 0.49 | 0.48 |
| 3 | 0.71 | 0.65 |
| 4 | 0.94 | 0.78 |
| 5 | 1.09 | 0.96 |
| 6 | 1.21 | 1.08 |
| 7 | 1.63 | 1.20 |
| 8 | 1.84 | 1.19 |
| 9 | 2.10 | 1.29 |
| 10 | 2.20 | 1.41 |
| 11 | 1.95 | 1.37 |
| 12 | 2.04 | 1.42 |
| 13 | 2.17 | 1.55 |
| 14 | 2.55 | 1.61 |
| 15 | 2.58 | 1.63 |
| 16 | 2.95 | 1.60 |
| 17 | 2.83 | 1.63 |
| 18 | 3.01 | 1.63 |
| 19 | 3.12 | 1.68 |
| 20 | 3.14 | 1.66 |
| 21 | 3.09 | 1.75 |
| 22 | 3.32 | 1.82 |
| 23 | 3.47 | 1.92 |
| 24 | 3.56 | 1.87 |
| 25 | 3.51 | 2.01 |

## Claims

1. Thermosetting binder compositions for powder coatings comprising a linear or branched carboxylic acid group containing isophtalic acid rich polyester, a linear or branched hydroxyl group containing polyester and a curing agent system having functional groups reactive with the polyester carboxylic acid groups and the hydroxyl groups, characterised in that the carboxylic group containing isophtalic acid rich polyester is amorphous and the hydroxyl group containing polyester is semi-crystalline.

2. Binder compositions according to claim 1, characterised in that the curing agent system is composed of at least one curing agent having functional groups reactive with the polyester carboxylic acid groups and at least one curing agent having functional groups reactive with the polyester hydroxyl groups, and/or at least one curing agent having functional groups reactive with both the polyester carboxylic acid groups and the polyester hydroxyl groups.

3. Binder composition according to anyone of the claims 1 and 2, characterised in that the carboxylic acid group containing amorphous polyester is composed of a dicarboxylic acid component comprising 50 to 100 mol percentage of isophthalic acid and from 0 to 50 mol percentage of another diacid selected from fumaric acid, maleic acid, phthalic anhydride, terephthalic acid, 1,4-cyclohexanedicarboxylic acid, 1,3-cyclohexanedicarboxylic acid, 1,2-cyclohexanedicarboxylic acid, succinic acid, adipic acid, glutaric acid, pimelic acid, suberic acid, azealic acid, sebacic acid, 1,12-dodecanedioic acid, etc., or the corresponding anhydrides., and of a glycol component comprising 70 to 100 mol percentage of neopentyl glycol and/or 2-butyl- 2-ethyl - 1,3-propanediol and 0 to 30 mol percentage of another glycol selected from ethyleneglycol, propyleneglycol, 1,4-butanediol, 1,6-hexanediol, 1,4-cyclohexanediol, 1,4-cyclohexanedimethanol, 2-methyl 1,3-propandediol, hydrogenated Bisphenol A, hydroxypivalate of neopentyl glycol.

4. Binder composition according to anyone of the claims 1-3, characterised in that the carboxylic acid group containing amorphous polyester is a branched polyester incorporating up to 15 mol percentage relative to isophthalic acid, of a polyacid such as trimellitic acid, pyromellitic acid, etc, or their corresponding anhydrides.

5. Binder composition according to anyone of claims 1-3, characterised in that the carboxylic acid group containing amorphous polyester is a branched polyester incorporating up to 15 mol percentage relative to neopentyl glycol and/or 2-butyl-2-ethyl-1,3-propanediol, of a polyol such as trimethylolpropane, ditrimethylolpropane, pentaerythrytol.

6. Binder composition according to anyone of the preceeding claims, characterised in that the hydroxyl functionalised semi-crystalline polyester is composed of 75 - 100 mol percentage of terephthalic acid and/or 1,4-cyclohexanedicarboxylic acid and from 0 to 25 mol percentage of another diacid selected from fumaric acid, maleic acid, phthalic anhydride, isophthalic acid, terephthalic acid, 1,4 cyclohexanedicarboxylic acid, 1,3-cyclohexanedicarboxylic acid, 1,2-cyclohexane dicarboxylic acid, succinic acid, adipic acid, glutaric acid, pimelic acid, suberic acid, azealic acid, sebacic acid, 1,12-dodecanedioic acid, etc., and of a glycol component comprising from 75 to 100 mol percentage of an aliphatic non-branched diol selected from ethyleneglycol, 1,3-propanediol, 1,4-butanediol, 1,5-pentanediol, 1,6-hexanediol, 1,7-heptanediol, 1,8-octanediol 1,9-nonanediol, 1,10-decanediol, 14-tetradecanediol, 1,16-hexadecanediol, etc. used in a mixture or alone, and 0 to 25 mol percentage of another glycol selected from propyleneglycol, neopentyl glycol, 2-methyl-1,3-propanediol, 2-butyl,2-ethyl-1,3-propanediol, hydrogenated Bisphenol A, hydroxypivalate of neopentyl glycol, 1,4-cyclohexanediol, 1,4-cyclohexanedimethanol.

7. Binder composition according to anyone of claims 1-5, characterised in that the hydroxyl functionalised semi-crystalline polyester is composed of 75 - 100 mol percentage of a linear non-branched aliphatic diacid selected from succinic acid, adipic acid, glutaric acid, pimelic acid, suberic acid, azealic acid, sebacic acid, 1,12-dodecanedioic acid, etc. used in a mixture or alone, and from 0 to 25 mol percentage of another diacid selected from fumaric acid, maleic acid, phthalic anhydride, terephthalic acid, isophthalic acid, 1,2-cyclohexanedicarboxylic acid, 1,3-cyclohexanedicarboxylic acid, 1,4-cyclohexanedicarboxylic acid, etc., and of a glycol component comprising from 75 to 100 mol percentage of a cycloaliphatic diol such as 1,4-cyclohexanediol, 1,4-cyclohexanedimethanol, hydrogenated Bisphenol A, etc. used in a mixture or alone, or an aliphatic non-branched diol such as ethyleneglycol, 1,3-propanediol, 1,4-butanediol, 1,5-pentanediol, 1,6 hexanediol, 1,7-heptanediol, 1,8-octanediol, 1,9-nonanediol, 1,10-decanediol, 14-tetradecanediol, 1,16-hexadecanediol, etc. used in a mixture or alone, and from 0 to 25 mol percentage of another glycol selected from propyleneglycol, neopentyl glycol, 2-methyl-1,3-, 2-butyl, 2-ethyl-1,3-propanediol, 1,4-cyclohexanediol, 1,4 cyclohexanedimethanol, hydrogenated Bisphenol A.

8. Binder composition according to anyone of claims 1-5, characterised in that the hydroxyl functionalised semi-crystalline polyester is a branched polyester incorporating up to 15 mol percentage based on the total of terephthalic acid, 1,4-cyclohexanedicarboxylic acid or non-branched aliphatic diacids, of a polyacid such as trimellitic acid, pyromellitic acid, etc., or their corresponding anhydrides.

9. Binder composition according to anyone of claims 1-5, characterised in that the hydroxyl functionalised semi-crystalline polyester is a branched polyester incorporating up to 15 mol percentage based on the total of aliphatic non-branched diols or cycloaliphatic diols, of a polyol such as trimethylolpropane, ditrimethylolpropane, pentaerythrytol.

10. Binder composition according to anyone of claims 1-5, characterised in that the hydroxyl functionalised semi-crystalline polyester is a branched polyester incorporating up to 30 mol percentage based on the total of terephthalic acid, 1,4-cyclohexanedicarboxylic acid or non-branched aliphatic diacids and/or on the total of aliphatic non-branched diols or cycloaliphatic diols, of monofunctional carboxylic acids having at least two hydroxyl groups wherein one or more of the hydroxyl groups can be hydroxyalkyl substituted, selected from α,α-bis-(hydroxymethyl)-propionic acid (dimethylolpropionic acid), α,α-bis-(hydroxymethyl)-butyric acid, α,α,α,-tris(bydroxymethyl)-acetic acid, α,α-bis-(hydroxymethyl)-valeric acid, α,α-bis-(hydroxy) propionic acid or α-phenylcarboxylic acids having at least two hydroxyl groups directly pendant to the phenyl ring (phenolic hydroxyl groups) such as 3,5-dihydroxybenzoic acid.

11. Binder composition according to anyone of the preceeding claims, characterised in that the carboxylic acid group containing isophthalic acid rich amorphous polyester has:
• an acid number from 15 to 100 mg KOH/g and preferably from 30 to 70 mg KOH/g;
• a number averaged molecular weight ranging from 1100 to 15000 and preferably from 1600 to 8500;
• a glass transition temperature (Tg) from 40 to 80°C ; and
• an ICI (cone/plate) viscosity at 200°C ranging from 5 to 15000 mPa.s

12. Binder composition according to anyone of the preceeding claims, characterised in that the hydroxyl group containing semi-crystalline polyester has:
• an hydroxyl number from 10 to 100 mg KOH/g and preferably from 15 to 80 mg KOH/g;
• a number averaged molecular weight ranging from 1100 to 17000 and preferably from 1400 to 11200;
• a fusion zone from 50 to 150°C;
• a glass transition temperature (Tg) from -50 to 50°C;
• a degree of crystallinity of at least 5 J/g and preferably 10J/g; and
• an ICI (cone/plate) viscosity at 175°C ranging from 5 to 10000 mPa.s

13. Binder composition according to anyone of the preceeding claims, characterised in that the thermosetting polyester blend is composed of :
• 55 to 95 and preferably 70 to 90 parts by weight of the carboxylic acid group containing isophthalic acid rich amorphous polyester; and
• 45 to 5 and preferably 30 to 10 parts by weight of the hydroxyl group containing semi-crystalline polyester.

14. Binder composition according to anyone of the preceeding claims, characterised in that the curing agent having functional groups reactive with the carboxylic acid groups of the isophthalic acid rich amorphous polyester, is a polyepoxy compound or a β-hydroxyalkylamide containing compound.

15. Binder composition according to anyone of the preceeding claims, characterised in that the curing agent having functional groups reactive with the hydroxyl groups of the semi-crystalline polyester, is a blocked polyisocyanate compound.

16. Binder composition according to anyone of the preceeding claims, characterised in that the carboxylic acid group containing amorphous polyester comprises a catalysing amount of thermosetting catalyst ranging from 0 to 5 weight percentage.

17. Binder composition according to anyone of the preceeding claims, characterised in that the hydroxyl group containing semi-crystalline polyester comprises a catalysing amount of thermosetting catalyst ranging from 0 to 5 weight percentage.

18. Binder composition according to anyone of the preceeding claims, characterised in that the binder is substantially based on:
• 28 to 93, preferably 43 to 86 parts by weight of the carboxylic acid group containing isophthalic acid rich amorphous polyester
• 43 to 3, preferably 29 to 7 parts by weight of the hydroxyl group containing semi-crystalline polyester
• 1 to 45, preferably 3 to 35 parts by weight of a curing agent having functional groups being reactive with the carboxylic acid groups of the amorphous polyester
• 21.0 to 0.1, preferably 9.0 to 0.5 parts by weight of a curing agent having functional groups reactive with the hydroxyl groups of the semi-crystalline polyester.

19. Thermosetting powder composition containing:
• a binder composition according to anyone of the preceeding claims
• UV-light absorbers and/or hindered amine light stabilisers
• flow control agent
• degassing agent.

20. Thermosetting powder composition according to claim 19 for use as a clear lacquer.

21. Thermosetting powder composition according to claim 19 containing pigments, dyes, fillers.

22. Entirely or partially coated substrate, characterised in that the coating material used, is a powder coating composition according to anyone of claims 19 to 21.
